# EUROPEAN PATENT SPECIFICATION

(11) **EP 4 207 932 B1**
(45) Date of publication and mention of the grant of the patent: **10.06.2026**
(21) Application number: 22214704.3
(22) Date of filing: 19.12.2022
(51) Int. Cl.: H04W 76/16, H04W 36/00

(54) **MA PDU HANDLING OF INTERWORKING FROM 5G TO 2G/3G**
MA-PDU-HANDHABUNG VON VERNETZUNG VON 5G ZU 2G/3G
GESTION DE PDU MA D'INTERFONCTIONNEMENT DE 5G À 2G/3G

(30) Priority: 03.01.2022 US 202263296029 P; 13.12.2022 US 202218080019
(43) Date of publication of application: 05.07.2023
(73) Proprietor: MEDIATEK INC., Hsinchu City 30078 (TW)
(72) Inventor: LIN, Yuan-Chieh, 30078 Hsinchu City (TW); CHEN, Chi-Hsien, 30078 Hsinchu City (TW)
(74) Representative: Habermann, Hruschka & Schnabel

(56) References cited:
- US-A1- 2016 080 978
- MEDIATEK INC: "A/Gb mode or Iu mode Interworking for PDN leg", vol. CT WG1, no. E-meeting; 20220117 - 20220121, 10 January 2022 (2022-01-10), XP052090438, Retrieved from the Internet <URL:https://ftp.3gpp.org/tsg_ct/WG1_mm-cc-sm_ex-CN1/TSGC1_133e-bis/Docs/C1-220172.zip C1-220172_AGb mode or Iu mode Interworking for PDN leg - 24193 Part_24193_CR0070.docx> [retrieved on 20220110]
- HA JEOUNGLAK ET AL: "Support of a Multi-access Session in 5G Mobile Network", 2019 25TH ASIA-PACIFIC CONFERENCE ON COMMUNICATIONS (APCC), IEEE, 6 November 2019 (2019-11-06), pages 378 - 383, XP033732122, DOI: 10.1109/APCC47188.2019.9026455
- INTERDIGITAL ET AL: "Support for MA PDU Session with 3GPP access in EPC", vol. CT WG1, no. Electronic meeting; 20210419 - 20210423, 26 May 2021 (2021-05-26), XP052014096, Retrieved from the Internet <URL:https://ftp.3gpp.org/tsg_ct/WG1_mm-cc-sm_ex-CN1/TSGC1_130e/Docs/C1-213673.zip C1-213673 Rel-17 CR 24.501 Support of MA PDU Session with 3GPP access in EPC.docx> [retrieved on 20210526]
- "3rd Generation Partnership Project; Technical Specification Group Core Network and Terminals; Non-Access-Stratum (NAS) protocol for Evolved Packet System (EPS); Stage 3 (Release 17))", 29 December 2021 (2021-12-29), XP052096653, Retrieved from the Internet <URL:https://ftp.3gpp.org/tsg_ct/WG1_mm-cc-sm_ex-CN1/TSGC1_133e/Draft%20specs%20after%20CT%2394e/Uploaded/draft-24301-h50-cl.zip draft-24301-h50.docx> [retrieved on 20211229]
- "3rd Generation Partnership Project; Technical Specification Group Services and System Aspects; General Packet Radio Service (GPRS) enhancements for Evolved Universal Terrestrial Radio Access Network (E-UTRAN) access (Release 16)", 23 December 2021 (2021-12-23), XP052095999, Retrieved from the Internet <URL:https://ftp.3gpp.org/3guInternal/3GPP_ultimate_versions_to_be_transposed/sentToDpc/23401-gc0.zip 23401-gc0.docx> [retrieved on 20211223]

## Description

### TECHNICAL FIELD

The disclosed embodiments relate generally to wireless communication, and, more particularly, to method of MA PDU handling that supports interworking from 5G system (5GS) to 2G/3G.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. Each PDU session is identified by a PDU session ID (PSI), and may include multiple QoS flows and QoS rules. Each PDU session can be established via a 5G access network (e.g.,3GPP radio access network (RAN), or via a non-3GPP access). The network and /or the UE can initiate different PDU session procedures, e.g., PDU session establishment, PDU session modification, and PDU session release, for managing the activation and deactivation of 5GS PDU sessions.

3GPP also introduced Multi-Access (MA) PDU session in 5GS. An MA PDU session can be configured to use one 3GPP access network or one non-3GPP access network at a time, or simultaneously one 3GPP access network and one non-3GPP access network. In addition, ATSSS (Access Traffic Steering, Switching, Splitting) is an optional feature that can be supported by the UE and the 5GC network to route data traffic across 3GPP access and non-3GPP access networks for the established MA PDU session. At any given time, the MA PDU session can have user-plane resources established on both 3GPP access (also referred as 3GPP 5GS leg) and non-3GPP access (also referred as non-3GPP 5GS leg), or on one access only (either 3GPP access or non-3GPP 5GS access). Furthermore, to utilized the broader coverage of LTE as compared to NR, a 4G EPS PDN connection can be established as the user-plane resource for a corresponding MA PDU session over 3GPP access (also referred as 3GPP EPS PDN leg).

If a UE supports interworking and the UE performs intersystem change from S1 mode to A/Gb (2G) or Iu (3G, UMTS) mode, UE uses parameters from each active EPS bearer context to activate a corresponding PDP context. At intersystem change from EPS to 2G, UE shall not activate the PDP context(s) if SM does not have the following parameters from the active EPS bearer context(s): a Logic Link Control (LLC) Service Access Point Identifier (SAPI), a radio priority parameter, a transaction identifier parameter, and a R99 Quality of Service (QoS) parameter. At intersystem change from EPS to 3G, UE shall not activate the PDP context(s) if SM does not have the following parameters from the active EPS bearer context(s): a transaction identifier parameter, and a R99 Quality of Service (QoS) parameter.

For an MA PDU session in 5GS with 3GPP EPS PDN leg (+ non-3GPP leg), UE may perform/encounter intersystem change from 5GS to 2/3G. The MA PDU only has one common configuration set that is shared by both EPS PDN leg and non-3GPP 5GS leg. If UE lost 4G signal and only has 2/3G signal but the UE still connects to 5G through WiFi, proper MA PDU handling is desired, depending on whether the UE activates the 2/3G PDP context from the PDN leg.
MA PDU handling methods and corresponding systems in this respect are, for example, disclosed in US 2016/080978 A1, publication HA JEOUNGLAK ET AL: "Support of a Multi-access Session in 5G Mobile Network", 2019 25TH ASIA-PACIFIC CONFERENCE ON COMMUNICATIONS (APCC), IEEE, (2019-11-06), pages 378-383, XP033732122, publication INTERDIGITAL ET AL: "Support for MA PDU Session with 3GPP access in EPC", 3GPP DRAFT; C1-213673, CT WG1, Electronic meeting; 20210419 - 20210423 (2021-05-26), XP052014096, publication "3rd Generation Partnership Project; Technical Specification Group Core Network and Terminals; Non-Access-Stratum (NAS) protocol for Evolved Packet System (EPS); Stage 3 (Release 17))", 3GPP DRAFT; DRAFT-24301-H50-CL, 29 December 2021 (2021-12-29), and publication "3rd Generation Partnership Project; Technical Specification Group Services and System Aspects; General Packet Radio Service (GPRS) enhancements for Evolved Universal Terrestrial Radio Access Network (E-UTRAN) access (Release 16)", 3GPP DRAFT; 23401-GC0, 3RD GENERATION PARTNERSHIP PROJECT (3GPP) (2021-12-23), XP052095999, respectively.

### SUMMARY

The present invention provides MA PDU handling methods having the features of claim 1 and of claim 7, respectively.
A method of handling interworking from 5G system (5GS) to 2/3G for an MA PDU session with a 3GPP EPS PDN leg is proposed. Upon intersystem change from S1 mode to A/Gb mode or Iu mode, for a PDN connection which was established as a user plane resource of an MA PDU session: if the SM activates a PDP context using parameters from the default EPS bearer context of the PDN connection, then the SMF can initiate a network-requested PDU session release procedure over non-3GPP access or perform a local release of the MA PDU session; the UE can perform a local release of the MA PDU session. On the other hand, if the SM does not activate a PDP context, (e.g., if the default EPS bearer context of the PDN connection does not have configured essential 2G PDP parameters when the UE intersystem change to A/Gb mode; or if the default EPS bearer context of the PDN connection does not have configured essential 3G PDP parameters when the UE intersystem change to Iu mode), then the SMF can initiate a network-requested PDU session modification procedure over non-3GPP access to move traffic of the MA PDU session to non-3GPP access, or initiate a network-requested PDU session release procedure over non-3GPP access without including the Access type IE or with the Access type IE indicating "non-3GPP access".

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G/4G/3G/2G network and intersystem change for a Multi-Access protocol data unit (MA PDU) session having a Packet Data Network (PDN) connection established as user plane resource on 3GPP access in accordance with one novel aspect.
Figure 2 illustrates simplified block diagrams of a user equipment (UE) and a network entity in accordance with embodiments of the current invention.
Figure 3 illustrates a first embodiment of network behavior upon inter-system change from 5GS/EPS to 2/3G when a PDN connection of an MA PDU session is transferred from 5GS to a PDP context in 2/3G.
Figure 4 illustrates a second embodiment of UE behavior upon inter-system change from 5GS/EPS to 2/3G when a PDN connection of an MA PDU session is transferred from 5GS to a PDP context in 2/3G.
Figure 5 illustrates a third embodiment of network behavior upon inter-system change from 5GS/EPS to 2/3G when a PDN connection of an MA PDU session is not transferred from 5GS to a PDP context in 2/3G.
Figure 6 is a flow chart of a method of supporting interworking from 5GS to 2G/3G for an MA PDU session having a 3GPP PDN leg that is transferred to a PDP context, from network perspective, in accordance with one novel aspect of the present invention.
Figure 7 is a flow chart a method of supporting interworking from 5GS to 2G/3G for an MA PDU session having a 3GPP PDN leg that is transferred to a PDP context, from UE perspective, in accordance with one novel aspect of the present invention.
Figure 8 is a flow chart of a method of supporting interworking from 5GS to 2G/3G for an MA PDU session having a 3GPP PDN leg that is not transferred to a PDP context, from network perspective, in accordance with one novel aspect of the present invention.

### DETAILED DESCRIPTION

Reference will now be made in detail to some embodiments of the invention, examples of which are illustrated in the accompanying drawings.

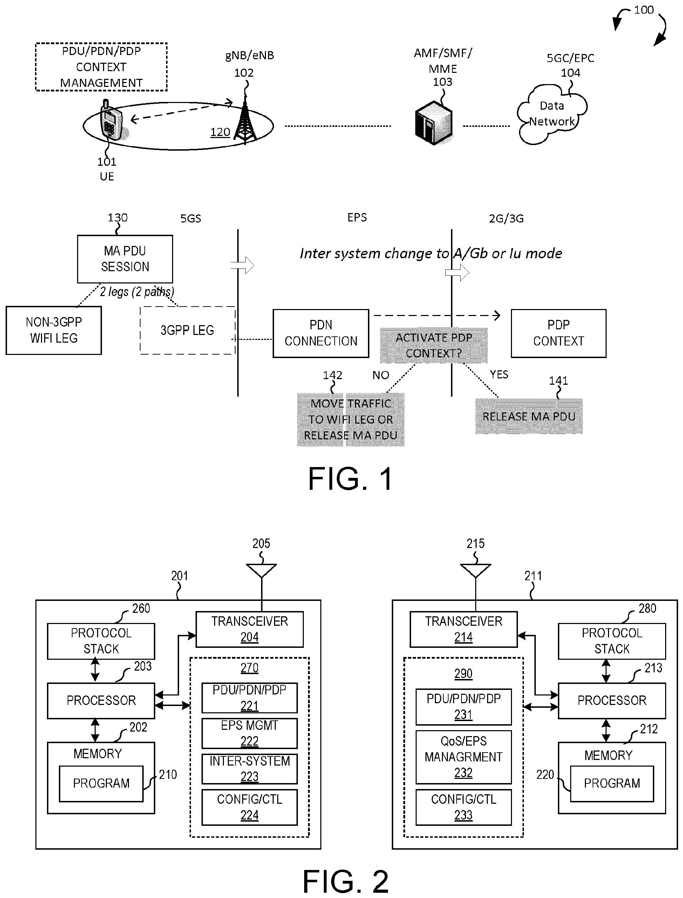

Figure 1 illustrates an exemplary 5G/4G/3G/2G network and intersystem change for a Multi-Access protocol data unit (MA PDU) session having a Packet Data Network (PDN) connection established as user plane resource on 4G 3GPP access in accordance with one novel aspect. 5G new radio (NR) network 100 comprises a user equipment UE 101, a base station gNB/eNB 102, an access and Mobility Management Function (AMF)/Session Management Function (SMF) 103, and a 5G/4G core network 5GC/EPC 104. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF/SMF 103 communicates with gNB 102 and 5GC 104 for access and mobility management and PDU session management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

EPS networks are packet-switched (PS) Internet Protocol (IP) networks. This means that the networks deliver all data traffic in IP packets, and provide users with Always-On IP Connectivity. When UE joins a 5GS network, a Packet Data Network (PDN) address (i.e., the one that can be used on the PDN) is assigned to the UE for its connection to the PDN. In 4G, a PDN connectivity procedure is to setup a Default EPS Bearer between a UE and the packet data network. EPS has defined the Default EPS Bearer to provide the IP Connectivity. In 5G, a Protocol Data Unit (PDU) session establishment procedure is a parallel procedure of a PDN connectivity procedure in 4G. A PDU session defines the association between the UE and the data network that provides a PDU connectivity service.

3GPP also introduced Multi-Access (MA) PDU session in 5GS. An MA PDU session can be configured to use one 3GPP access network or one non-3GPP access network at a time, or simultaneously one 3GPP access network and one non-3GPP access network. In addition, ATSSS (Access Traffic Steering, Switching, Splitting) is an optional feature that can be supported by the UE and the 5GC network to route data traffic across 3GPP access and non-3GPP access networks for the established MA PDU session. At any given time, the MA PDU session can have user-plane resources established on both 3GPP access (also referred as 3GPP 5GS leg) and non-3GPP access (also referred as non-3GPP 5GS leg), or on one access only (either 3GPP access or non-3GPP 5GS access). Furthermore, to utilized the broader coverage of LTE as compared to NR, a 4G EPS PDN connection can be established as a user-plane resource for a corresponding MA PDU session over 3GPP access (also referred as 3GPP EPS PDN leg).

If a UE supports interworking and the UE performs intersystem change from S1 mode to A/Gb (2G) or Iu (3G, UMTS) mode, UE uses parameters from each active EPS bearer context to activate a corresponding PDP context. At intersystem change from EPS to 2G, UE shall not activate the PDP context(s) if SM does not have the following parameters from the active EPS bearer context(s): a Logic Link Control (LLC) Service Access Point Identifier (SAPI), a radio priority parameter, a transaction identifier parameter, and a R99 Quality of Service (QoS) parameter. At intersystem change from EPS to 3G, UE shall not activate the PDP context(s) if SM does not have the following parameters from the active EPS bearer context(s): a transaction identifier parameter, and a R99 Quality of Service (QoS) parameter.

In the example of Figure 1, UE 101 maintains an MA PDU session 130 in 5GS, which has a non-3GPP 5GS WiFi leg and a 3GPP EPS PDN leg. The PDN connection in EPS is established as the user plane resource for the MA PDU session 130. The MA PDU 130 only has one common configuration set shared by both EPS PDN leg and non-3GPP 5GS leg. If UE 101 lost 4G signal and only has 2/3G signal, UE 101 may perfrom intersystem change from S1 mode to A/Gb mode (2G) or Iu mode (3G). Accordingly, UE 101 may activate 2/3G PDP context(s) by using parameters from EPS bearer context(s) of the PDN connection. If the default EPS bearer of the PDN connection is converted/activated to 2/3G PDP context, then the 2/3G PDP context would grab the ownership of the common configuration set, while the WiFi (non-3GPP access) leg of the MA PDU sesion would also try to use the same common configuration set which is no longer owned by the residual leg of the MA PDU session. If the PDN connection is not converted to 2/3G PDP context(s), then the PDN leg of the MA PDU session can no longer be used due to no 4G coverage, and all traffic would have to go through the WiFi leg of the MA PDU session.

Whether UE will activate the 2/3G PDP context depends on whether the default EPS bearer of the PDN connnection is configured with a set of essential parameters for 2/3G PDP context activation. In one novel aspect, if the PDN connection is converted to 2/3G PDP context (141), then the network can either initiate the network-requested PDU session release procedure over non-3GPP access or perform a local release of the MA PDU session; and the UE can perfrom a local release of the MA PDU session as well. If the default EPS bearer of the PDN connection is not converted to 2/3G PDP context (142), then the network can initiate the network-requested PDU session modificaiton procedure over non-3GPP access to move the traffic of the MA PDU session to non-3GPP access; or the network can initiate the network-requested PDU session release procedure over non-3GPP access, without including the Access Type IE or with the Access Type IE indicating "non-3GPP access".

Figure 2 illustrates simplified block diagrams of wireless devices, e.g., a UE 201 and a network entity 211 in accordance with embodiments of the current invention. Network entity 211 may be a base station and/or an AMF/SMF/MME/SGSN/RAN. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session and PDN connection and PDP context handling circuit 231 handles PDU/PDN/PDP establishment and modification procedures. QoS and EPS bearer management circuit 232 creates, modifies, and deletes QoS and EPS bearers for UE. Configuration and control circuit 233 provides different parameters to configure and control UE of related functionalities including mobility management and PDU/PDN/PDP management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an AMF/SMF/MME/SGSN entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, system modules and circuits 270 comprise PDU session, PDN connection, and PDP context handling circuit 221 that performs PDU session and PDN connection establishment and modification procedures with the network, a session management circuit 222 that manages session parameters, an inter-system handling circuit 223 that handles inter-system change functionalities, and a config and control circuit 224 that handles configuration and control parameters for mobility management and session management.

For inter-system change from S1 mode to A/Gb mode or Iu mode, SM uses the following parameters from each active EPC bearer context: EPS bearer identity to map to NSAPI; linked PES bearer identity (if available) to map to linked TI; PDN address and APN of the default PES bearer context to map to PDP address and APN of the default PDP context; TFT of the default EPS bearer context, if any, to map to the TFT of the default PDP context; TFTs of the dedicated EPS bearer contexts to map to TFTs of the secondary PDP contexts; and GERAN/UTRAN parameters are provided by the MME while on E-UTRAN access. The MME performs the mapping from EPS to R99 QoS parameters.

At inter-system change form S1 mode to A/Gb mode, SM shall not activate the PDP context(s) if SM does not have the following parameters: a Logic Link Control (LLC) Service Access Point Identifier (SAPI), a radio priority parameter, a transaction identifier parameter, and a R99 Quality of Service (QoS) parameter. At inter-system change form S1 mode to Iu mode, SM shall not activate the PDP context(s) if SM does not have the following parameters: a transaction identifier parameter, and a R99 Quality of Service (QoS) parameter.

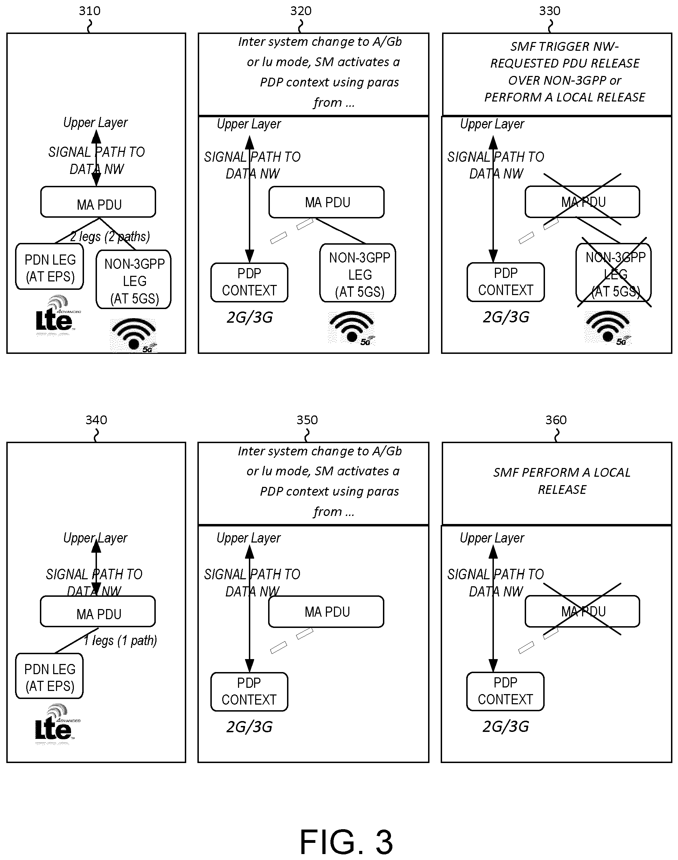

Figure 3 illustrates a first embodiment of network behavior upon inter-system change to 2/3G when a PDN connection of an MA PDU session is transferred to a PDP context in 2/3G. In a first example, in step 310, a UE maintains an MA PDU session in 5GS, which has two legs and two paths to the data network. When the MA PDU session is activated, a user plane resource is established on non-3GPP access (the non-3GPP WiFi leg), and a PDN connection in EPS is established as a user plane resource on 3GPP access (the 3GPP PDN leg). In step 320, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM activates a PDP context using parameters from the default EPS bearer context of the PDN connection, then the SMF can initiate the network-requested PDU session release procedure over non-3GPP access or perform a local release of the MA PDU session, as depicted in step 330. The reasoning is that the PDP context will use the common configuration set assigned to the MA PDU, and therefore the MA PDU needs to be released, otherwise the WiFi leg of the MA PDU and the PDP will occupy and use the same common configuration set and cause conflict.

In a second example of Figure 3, in step 340, a UE maintains an MA PDU session in 5GS, which has one leg and one path to the data network. When the MA PDU session is activated, a PDN connection in EPS is established as a user plane resource on 3GPP access (the 3GPP PDN leg). In step 350, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM activates a PDP context using parameters from the default EPS bearer context of the PDN connection, then the SMF can perform a local release of the MA PDU session, as depicted in step 360. The reasoning is that the MA PDU has no active leg available and is no longer needed.

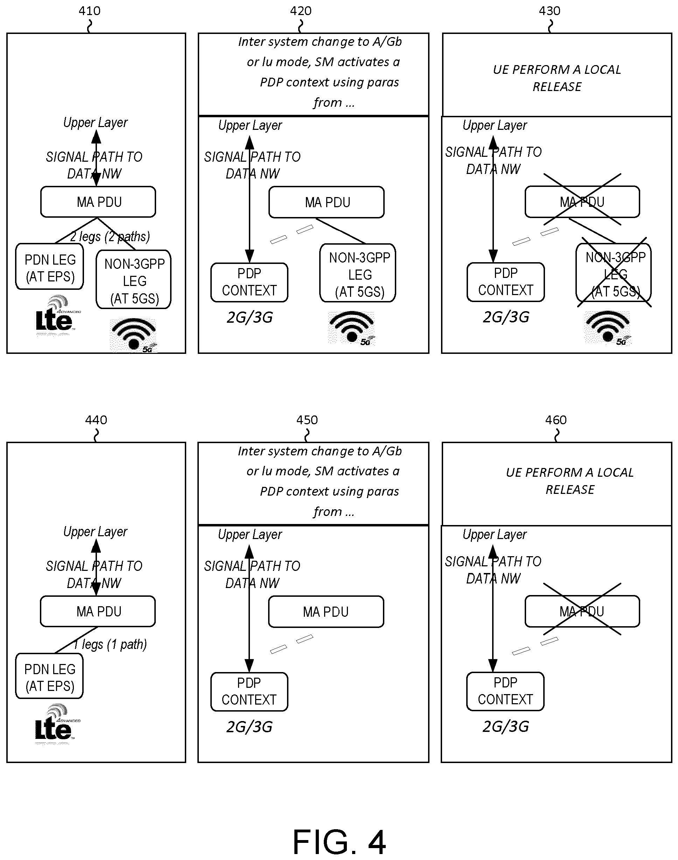

Figure 4 illustrates a second embodiment of UE behavior upon inter-system change to 2/3G when a PDN connection of an MA PDU session is transferred to a PDP context in 2/3G. In a first example, in step 410, a UE maintains an MA PDU session in 5GS, which has two legs and two signal paths to the data network. When the MA PDU session is activated, user plane resources are established on non-3GPP access (the non-3GPP WiFi leg), and a PDN connection in EPS is established as a user plane resource on 3GPP access (the 3GPP PDN leg). In step 420, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM activates a PDP context using parameters from the default EPS bearer context of the PDN connection, then the UE can perform a local release of the MA PDU session, as depicted in step 430. The reasoning is that the activated PDP context will use the common configuration set assigned to the MA PDU session, and therefore the MA PDU session needs to be released; otherwise, the WiFi leg of the MA PDU and the PDP will occupy and use the same common configuration set and cause conflict.

In a second example of Figure 4, in step 440, a UE maintains an MA PDU session in 5GS, which has one leg and one path to the data network. When the MA PDU session is activated, a PDN connection in EPS is established as a user plane resource on 3GPP access (the 3GPP PDN leg). In step 450, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM activates a PDP context using parameters from the default EPS bearer context of the PDN connection, then the UE can perform a local release of the MA PDU session, as depicted in step 460. The reasoning is that the MA PDU session is no longer needed.

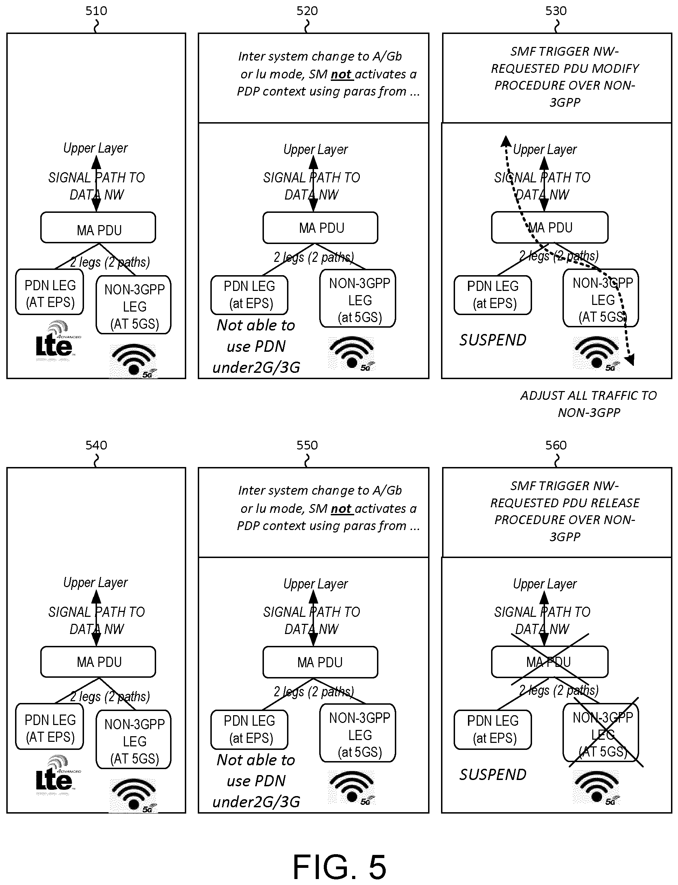

Figure 5 illustrates a third embodiment of network behavior upon inter-system change to 2/3G when a PDN connection of an MA PDU session is not transferred to a PDP context in 2/3G. Upon intersystem change from S1 mode to A/Gb mode or Iu mode, for a PDN connection which was established as a user plane resource of an MA PDU session, the SM does NOT activate the PDP context(s) if SM does not have the set of essential parameters.

In a first example of Figure 5, in step 510, a UE maintains an MA PDU session in 5GS, which has two legs and two paths to the data network. When the MA PDU session is activated, user plane resources are established on non-3GPP access (the non-3GPP WiFi leg), and a PDN connection in EPS is established as a user plane resource on 3GPP access (the 3GPP PDN leg). In step 520, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM does NOT activate a PDP context using parameters from the default EPS bearer context of the PDN connection, then the SMF can initiate the network-requested PDU session modification procedure over non-3GPP access, as depicted in step 530. The purpose of the PDU session modification procedure is to move all traffic to non-3GPP access, by adjusting the ATSSS parameter of the MA PDU. The reasoning is that the PDN leg is no longer reachable to the UE.

In a second example of Figure 5, in step 540, a UE maintains an MA PDU session in 5GS, which has two legs and two signal paths to the data network. When the MA PDU session is activated, user plane resources are established on non-3GPP access (the non-3GPP WiFi leg), and a PDN connection in EPS is established as a user plane resource on 3GPP access (the 3GPP PDN leg). In step 550, the UE performs intersystem change to A/Gb or Iu mode, e.g., due to poor radio signal coverage in EPS. Upon intersystem change from S1 mode to A/Gb mode or Iu mode, for a PDN connection which was established as a user plane resource of an MA PDU session: if the SM does NOT activate a PDP context using parameters from the default EPS bearer context of the PDN connection, then the SMF can initiate the network-requested PDU session release procedure over non-3GPP access, as depicted in step 560.

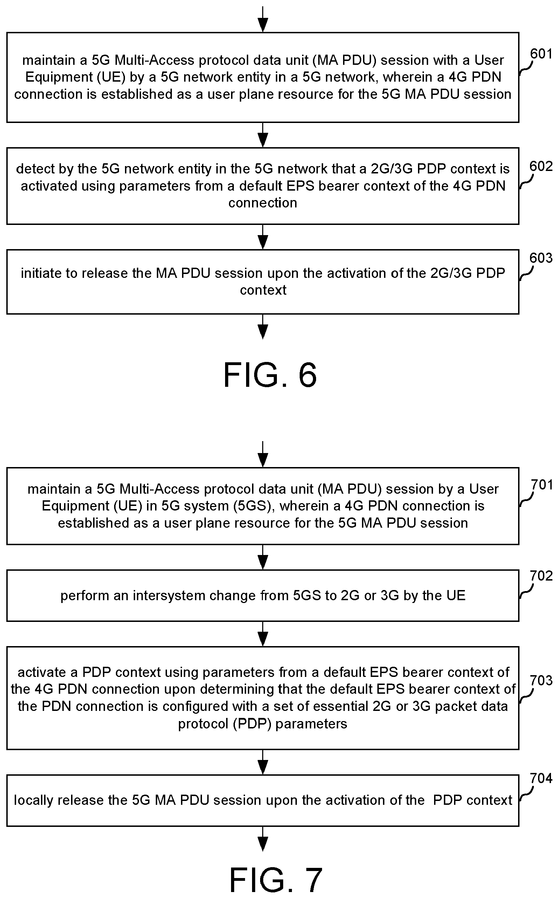

Figure 6 is a flow chart of a method of supporting interworking with 2G/3G for a 5G MA PDU session having a 3GPP PDN leg that is transferred to a PDP context, from network perspective, in accordance with one novel aspect of the present invention. In step 601, a 5G network entity maintains a 5G Multi-Access Protocol Data Unit (MA PDU) session with a User Equipment (UE) in a 5G network, wherein a 4G Packet Data Network (PDN) connection is established as a user plane resource for the 5G MA PDU session. In step 602, the 5G network entity detects in the 5G network that a 2G/3G PDP context is activated using parameters from a default evolved packet system (EPS) bearer context of the 4G PDN connection. In step 603, the 5G network entity initiates to release the 5G MA PDU session upon the activation of the 2G/3G PDP context.

Figure 7 is a flow chart a method of supporting interworking with 2G/3G for a 5G MA PDU session having a 3GPP PDN leg that is transferred to a PDP context, from UE perspective, in accordance with one novel aspect of the present invention. In step 701, a UE maintains a 5G Multi-Access protocol data unit (MA PDU) session in a 5G network, wherein a 4G PDN connection is established as a user plane resource for the 5G MA PDU session. In step 702, the UE performs an intersystem change to 2G/3G. In step 703, the UE activates a PDP context using parameters from a default EPS bearer context of the 4G PDN connection upon determining that the default EPS bearer context of the PDN connection is configured with a set of essential 2G or 3G packet data protocol (PDP) parameters. In step 704, the UE locally releases the MA PDU session upon the activation of the PDP context.

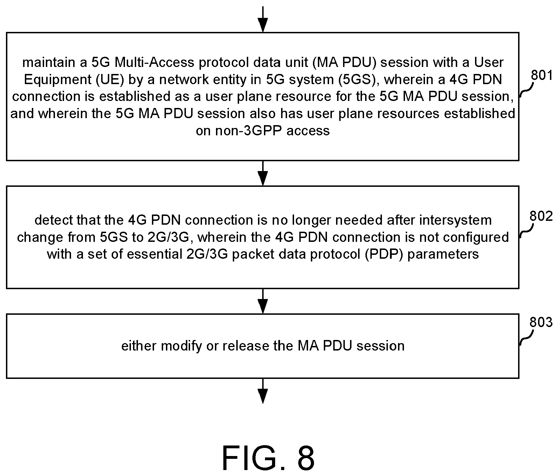

Figure 8 is a flow chart of a method of supporting interworking with 2G/3G for a 5G MA PDU session having a 3GPP PDN leg that is not transferred to a PDP context, from network perspective, in accordance with one novel aspect of the present invention. In step 801, a network entity maintains a 5G Multi-Access protocol data unit (MA PDU) session with a User Equipment (UE) in a 5G network, wherein a 4G PDN connection is established as a user plane resource for the 5G MA PDU session, and wherein the 5G MA PDU session also has a user plane resource established on non-3GPP access. In step 802, the network entity detects that the 4G PDN connection is no longer needed after intersystem change to 2G/3G, wherein the 4G PDN connection is not configured with a set of essential 2G/3G packet data protocol (PDP) parameters. In step 803, the network entity either modify or release the MA PDU session.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining (601) a 5G Multi-Access Protocol Data Unit, MA PDU, session with a User Equipment, UE (201), by a 5G network entity in a 5G network, wherein a 4G Packet Data Network, PDN, connection is established as a user plane resource for the 5G MA PDU session;
detecting (602) by the 5G network entity in the 5G network that a 2G/3G PDP context is activated using parameters from a default evolved packet system, EPS, bearer context of the 4G PDN connection; and
initiating (603) to release the 5G MA PDU session upon the activation of the 2G/3G PDP context.

2. The method of Claim 1, wherein the 5G network entity is a session management, SM, entity, wherein the SM entity contains at least one of a Serving GPRS Support Node, SGSN, a mobility management entity, MME, or a session management function, SMF.

3. The method of Claim 1, wherein the 2G/3G PDP context is activated based on a configured set of essential 2G/3G PDP parameters of the default EPS bearer context of the PDN connection.

4. The method of Claim 3, wherein the set of essential 2G PDP parameters comprises a Logic Link Control, LLC, Service Access Point Identifier, SAPI, a radio priority parameter, a transaction identifier parameter, and a R99 Quality of Service, QoS, parameter; and/or
wherein the set of essential 3G PDP parameters comprises a transaction identifier parameter and a R99 Quality of Service, QoS, parameter.

5. The method of Claim 1, wherein the 5G network entity initiates a network-requested PDU session release procedure over non-3GPP access; or
wherein the 5G network entity locally releases the 5G MA PDU session.

6. The method of Claim 1, wherein the 5G MA PDU also has user plane resources established on 5G non-3GPP access, and wherein the 5G network entity releases the entire 5G MA PDU session.

7. A method, comprising:
Maintaining (701) a 5G Multi-Access protocol data unit, MA PDU, session by a User Equipment, UE (201), in a 5G network, wherein a 4G Packet Data Network, PDN, connection is established as a user plane resource for the 5G MA PDU session;
performing (702) an intersystem change to 2G or 3G by the UE;
activating (703) a packet data protocol, PDP, context using parameters from a default EPS bearer context of the 4G PDN connection upon determining that the default EPS bearer context of the PDN connection is configured with a set of essential 2G or 3G PDP parameters; and
locally releasing (704) the 5G MA PDU session upon the activation of the PDP context.

8. The method of Claim 7, wherein the PDP context is activated based on the configured set of essential 2G or 3G PDP parameters of a default EPS bearer context of the 4G PDN connection.

9. The method of Claim 7, wherein the set of essential 2G PDP parameters comprises a Logic Link Control, LLC, Service Access Point Identifier, SAPI, a radio priority parameter, a transaction identifier parameter, and a R99 Quality of Service, QoS, parameter; and/or
wherein the set of essential 3G PDP parameters comprises a transaction identifier parameter and a R99 Quality of Service, QoS, parameter.

10. The method of Claim 7, wherein the MA PDU also has user plane resources established on 5G non-3GPP access, and wherein the UE locally releases the entire MA PDU session.

## Patentansprüche

1. Verfahren, aufweisend:
Aufrechterhalten (601) einer 5G-Multi-Access-Protocol-Data-Unit-, MA-PDU, Sitzung mit einem Benutzergerät, UE (201), durch eine 5G-Netzwerkeinheit in einem 5G-Netzwerk, wobei eine 4G-Paketdatennetzwerk-, PDN, Verbindung als Benutzer-Ebenen-Ressource für die 5G-MA-PDU-Sitzung hergestellt wird;
Erkennen (602) durch die 5G-Netzwerkeinheit im 5G-Netzwerk, dass ein 2G/3G-PDP-Kontext unter Verwendung von Parametern aus einem Standard-Evolved Packet System-, EPS, Trägerkontext der 4G-PDN-Verbindung aktiviert wird; und
Initiieren (603) der Freigabe der 5G-MA-PDU-Sitzung bei Aktivierung des 2G/3G-PDP-Kontexts.

2. Verfahren nach Anspruch 1, bei dem die 5G-Netzwerkeinheit eine Sitzungsverwaltungs-, SM, Instanz ist, wobei die SM-Instanz mindestens eine der folgenden Instanzen enthält: einen Serving GPRS Support Node, SGSN, eine Mobilitätsverwaltungsinstanz, MME, oder eine Sitzungsverwaltungsfunktion, SMF.

3. Verfahren nach Anspruch 1, bei dem der 2G/3G-PDP-Kontext auf der Grundlage eines konfigurierten Satzes wesentlicher 2G/3G-PDP-Parameter des Standard-EPS-Trägerkontexts der PDN-Verbindung aktiviert wird.

4. Verfahren nach Anspruch 3, bei dem der Satz wesentlicher 2G-PDP-Parameter einen Service Access Point Identifier, SAPI, der Logic Link Control, LLC, einen Funkprioritätsparameter, einen Transaktionsidentifikatorparameter und einen R99-Quality of Service-, QoS, Parameter aufweist; und/oder bei dem der Satz wesentlicher 3G-PDP-Parameter einen Transaktionsidentifikatorparameter und einen R99-Quality-of-Service-, QoS, Parameter aufweist.

5. Verfahren nach Anspruch 1, bei dem die 5G-Netzwerkeinheit ein vom Netzwerk angefordertes PDU-Sitzungsfreigabeverfahren über einen Nicht-3GPP-Zugang initiiert; oder
bei dem die 5G-Netzwerkinstanz die 5G-MA-PDU-Sitzung lokal freigibt.

6. Verfahren nach Anspruch 1, bei dem die MA-PDU auch Benutzer-Ebenen-Ressourcen aufweist, die über einen 5G-Nicht-3GPP-Zugang eingerichtet wurden, und bei dem das die 5G-Netzwerkeinheit die gesamte MA-PDU-Sitzung lokal freigibt.

7. Verfahren, aufweisend:
Aufrechterhalten (701) einer 5G-Multi-Access-Protocol-Data-Unit-, MA-PDU, Sitzung mit einem Benutzergerät, UE (201), in einem 5G-Netzwerk, wobei eine 4G-Paketdatennetzwerk-, PDN, Verbindung als Benutzer-Ebenen-Ressource für die 5G-MA-PDU-Sitzung hergestellt wird;
Durchführen (702) eines Systemwechsels zu 2G oder 3G durch das UE;
Aktivieren (703) eines Paketdatenprotokoll- PDP, Kontexts unter Verwendung von Parametern aus einem Standard-EPS-Trägerkontext der 4G-PDN-Verbindung, sobald festgestellt wird, dass der Standard-EPS-Trägerkontext der PDN-Verbindung mit einem Satz wesentlicher 2G- oder 3G-PDP-Parameter konfiguriert ist; und
lokales Freigeben (704) der 5G-MA-PDU-Sitzung bei Aktivierung des PDP-Kontexts.

8. Verfahren nach Anspruch 7, bei dem der PDP-Kontext auf der Grundlage des konfigurierten Satzes wesentlicher 2G- oder 3G-PDP-Parameter eines Standard-EPS-Trägerkontexts der 4G-PDN-Verbindung aktiviert wird.

9. Verfahren nach Anspruch 7, bei dem der Satz wesentlicher 2G-PDP-Parameter einen Service Access Point Identifier, SAPI, der Logic Link Control, LLC, einen Funkprioritätsparameter, einen Transaktionsidentifikatorparameter und einen R99-Quality of Service-, QoS, Parameter aufweist; und/oder bei dem der Satz wesentlicher 3G-PDP-Parameter einen Transaktionsidentifikatorparameter und einen R99-Quality-of-Service-, QoS, Parameter aufweist.

10. Verfahren nach Anspruch 7, bei dem die MA-PDU auch Benutzer-Ebenen-Ressourcen aufweist, die über einen 5G-Nicht-3GPP-Zugang eingerichtet wurden, und bei dem das UE die gesamte MA-PDU-Sitzung lokal freigibt.

## Revendications

1. Procédé comprenant:
maintenir (601) d'une session d'unité de données de protocole d'accès multiple 5G, MA-PDU, avec un terminal utilisateur, UE 201, par une unité de réseau 5G dans un réseau 5G, une connexion de réseau de données par paquets 4G, PDN, étant établie en tant que ressource de niveau utilisateur pour la session 5G-MA-PDU;
détecter (602) par l'unité de réseau 5G dans le réseau 5G qu'un contexte PDP 2G/3G est activé en utilisant des paramètres provenant d'un contexte de système de paquets évolué standard, EPS; et
lancer (603) de la libération de la session 5G-MA-PDU lors de l'activation du contexte PDP 2G/3G.

2. Procédé selon la revendication 1, dans lequel l'unité de réseau 5G est une instance de gestion de session, SM, l'instance SM comprenant au moins l'une des instances suivantes: un nœud de support GPRS de desserte, SGSN, une instance de gestion de mobilité, MME, ou une fonction de gestion de session, SMF.

3. Procédé selon la revendication 1, dans lequel le contexte PDP 2G/3G est activé sur la base d'un ensemble configuré de paramètres PDP 2G/3G essentiels d'un contexte EPS standard de la connexion PDN.

4. Procédé selon la revendication 3, dans lequel l'ensemble de paramètres PDP 2G essentiels comprend un identifiant de point d'accès au service, SAPI, de la commande de liaison logique, LLC, un paramètre de priorité radio, un paramètre d'identifiant de transaction et un paramètre de qualité de service, QoS, R99; et/ou
dans lequel l'ensemble de paramètres PDP 3G essentiels comprend un paramètre d'identifiant de transaction et un paramètre de qualité de service, QoS, R99.

5. Procédé selon la revendication 1, dans lequel l'unité de réseau 5G initie une procédure de libération de session PDU demandée par le réseau via un accès non 3GPP; ou
dans lequel l'unité de réseau 5G libère localement la session 5G-MA-PDU.

6. Procédé selon la revendication 1, dans lequel la 5G-MA-PDU comprend également des ressources de niveau utilisateur qui ont été établies via un accès 5G non-3GPP, et dans lequel l'unité de réseau 5G libère localement l'intégralité de la session 5G-MA-PDU.

7. Procédé comprenant :
maintenir (701) d'une session d'unité de données de protocole d'accès multiple 5G, MA-PDU, avec un terminal utilisateur, UE 201, dans un réseau 5G, une connexion de réseau de données par paquets 4G, PDN, étant établie en tant que ressource de niveau utilisateur pour la session 5G-MA-PDU;
exécuter (702) d'un changement de système vers la 2G ou la 3G par l'UE;
activer (703) un contexte de protocole de données par paquets, PDP, en utilisant des paramètres provenant d'un contexte de support EPS standard de la connexion PDN 4G, dès qu'il est déterminé que le contexte de support EPS standard de la connexion PDN est configuré avec un ensemble de paramètres PDP 2G ou 3G essentiels; et
libérer (704) localement de la session 5G-MA-PDU lors de l'activation du contexte PDP.

8. Procédé selon la revendication 7, dans lequel le contexte PDP est activé sur la base de l'ensemble configuré de paramètres PDP 2G ou 3G essentiels d'un contexte de support EPS standard de la connexion PDN 4G.

9. Procédé selon la revendication 7, dans lequel l'ensemble de paramètres PDP 2G essentiels comprend un identifiant de point d'accès au service, SAPI, de la commande de liaison logique, LLC, un paramètre de priorité radio, un paramètre d'identifiant de transaction et un paramètre de qualité de service, QoS, R99; et/ou
dans lequel l'ensemble de paramètres PDP 3G essentiels comprend un paramètre d'identifiant de transaction et un paramètre de qualité de service, QoS, R99.

10. Procédé selon la revendication 7, dans lequel la MA-PDU comprend également des ressources de niveau utilisateur qui ont été établies via un accès 5G non-3GPP, et dans lequel l'unité de réseau 5G libère localement l'intégralité de la session MA-PDU.
